# NEW EUROPEAN PATENT SPECIFICATION

(11) **EP 0 178 844 B2**
(45) Date of publication and mention of the opposition decision: **30.03.1994**
(45) Mention of the grant of the patent: 19.12.1990
(21) Application number: 85307222.1
(22) Date of filing: 09.10.1985
(51) Int. Cl.: H04N 5/44, H04N 17/04

(54) **Television receivers**
Fernsehempfänger
Récepteurs de télévision

(30) Priority: 16.10.1984 JP 217036/84
(43) Date of publication of application: 23.04.1986
(73) Proprietor: SONY CORPORATION, Tokyo 141 (JP)
(72) Inventor: Itabashi, Takao c/o Sony Corporation, Shinagawa-ku Tokyo 141 (JP); Saito, Junya c/o Sony Corporation, Shinagawa-ku Tokyo 141 (JP); Ichikawa, Norihito c/o Sony Corporation, Shinagawa-ku Tokyo 141 (JP); Yamada, Hisafumi c/o Sony Corporation, Shinagawa-ku Tokyo 141 (JP)
(74) Representative: Cotter, Ivan John

(56) References cited:
- EP-A- 0 136 060
- US-A- 4 277 797
- FUNK-TECHNIK, vol. 38, no. 5, 1983, Munich, Heidelberg THOMAS FISCHER:"Schaltungstecknik eines Fernsehgerätes mit DIGIVISION", pages 189-190
- ELECTRONICS, Sept. 8, 1983, New York ROLF DEUBERT:"Digital prowess increases in color television sets", pages 131-133
- DIGIT 2000 VLSI Digital TV System, Publ. no.6250-11-2E 1984/5
- DIGIT 2000 VLSI Digital TV System, Publ.no.6251-190-4E May 1983

## Description

This invention relates to apparatus and methods for use with a television receiver that processes a television signal in digital form.

Colour television receivers or sets are known in which the majority of signal processing that takes place therein is carried out digitally. That is, a video or television signal is received in a conventional fashion using a known analog tuning circuit and then, following the tuning operation, the received analog television signal is converted into a digital signal and digitally processed before subsequently being converted back to an analog signal for display on a colour cathode ray tube.

A colour television set of the above kind is described in an article by Thomas Fischer entitled "Schaltungtechnik eines Fernsehgeraetes mit DIGIVISION (Circuitry of a television set with DIGIVISION) appearing at pages 189 and 190 of FUNK-TECHNIK, Vol. 38, No. 5, 1983, Munich, Heidelberg. The set described in the article comprises a central control unit (CCU) which supplies control and setting values, for example of loudness, colour saturation or frame height, to digital audio and video signal processors. The central control unit comprises a microcomputer; and a non-volatile memory which is programmed during production of the set with balance values for the chassis and in which the user can store (by way of a keyboard or remote control commander) desired setting values and desired channels.

Although digital signal processing has many advantages over conventional analog signal processing, one problem that is presented by digital signal processing relates to the state of the circuitry at the time immediately following the manufacture of the television set or receiver or following servicing of the set by a repair technician. Although conventional analog components and signal processing elements can be set easily to an appropriate value, such as a midpoint of a range, at the time of manufacture, and such values will be held until adjusted later, digital circuits employing memory units, registers, and so forth do not have any initial settings and, indeed, cannot be set initially in the absence of some sort of digital pre-programming source. Examples of some of the various parameters that may be preset in the digital circuitry of a colour television receiver are contrast, brightness, hue, colour saturation degree, white balance and, perhaps most importantly, horizontal and vertical deflections. The problem arises that if the television receiver is turned on before appropriate initial values are set for the above-identified parameters, it is quite possible that random or zero values present in the digital memories may be abnormal and outside of tolerable limits. Such abnormal values then would cause adverse influence on appropriate circuit portions. For example, were the horizontal and vertical amplitudes increased or horizontal and vertical oscillation frequencies decreased drastically, there is a good likelihood that the horizontal or vertical output circuits will be destroyed.

According to the invention, there is provided, control apparatus for controlling the operation of a television receiver that processes a television signal in digital form under the control of digital data stored in at least one register of the receiver, the control apparatus comprising:
first memory means in the television receiver for storing control data representing display parameters to be set in the at least one register on turning on the television receiver for controlling the television receiver, said control data comprising standard data values input during an adjusting mode and offset data; and
second memory means in the television receiver, the second memory means being non-volatile and non-rewritable;
characterised by:
the second memory means containing, prior to the television receiver being turned on for the first time, predetermined initial control data representing initial display parameters for the receiver; and
control means in the television receiver connected to the first and second memory means and operable when the television receiver is turned on for the first time, in said adjusting mode, to cause the predetermined initial control data from the second memory means to be set in the at least one register instead of said control data from said first memory means.

The invention also provides a method of operating a television receiver that processes a television signal in digital form under the control of digital data stored in a register of the receiver and includes an adjusting controller, the method comprising the steps of:
providing first memory means in the television receiver for storing control data representing display parameters to be set in the at least one register on turning on the television receiver for controlling the television receiver, said control data comprising standard data values input during an adjusting mode and offset data; and
providing second memory means in the television receiver, the second memory means being non-volatile and non-rewritable;
characterised by:
the second memory means containing, prior to the television receiver being turned on for the first time, predetermined initial control data representing initial display parameters for the receiver; and
determining whether the television receiver is in said adjusting mode and, when the television receiver is determined to be in said adjusting mode, for the first time the television receiver is turned on, causing the predetermined initial control data from the second non-volatile memory means to be set in the at least one register instead of said control data from said first memory means.

The use of such stored predetermined initialisation or initial control data can eliminate or at least alleviate the above-noted defects. Specifically, it can prevent circuit portions of the receiver from having undue signal levels and/or frequencies impressed thereon as a result of abnormal initial settings.

Preferably, memory units associated with one or more microcomputers utilised as part of the receiver are provided to accommodate the desired initial control data.

Preferably, the initial control data is selected statistically to be average data and such data is entered at the very first time a power switch of the television receiver is turned on. Such specific data initialisation also can occur following a servicing operation on the receiver.

The invention will now be further described, by way of illustrative and non-limiting example, with reference to the accompanying drawings, in which like references indicate like elements or parts throughout, and in which:
Figure 1 is a schematic block diagram of an example of a previously proposed television receiver having digital signal processing capabilities;
Figure 2 is a schematic block diagram of a portion of the television receiver of Figure 1 modified according to an embodiment of the present invention;
Figure 3 is a logical flow chart useful in explaining the operation of the modified digital television receiver of Figure 2; and
Figure 4 is a schematic block diagram of another embodiment of the present invention.

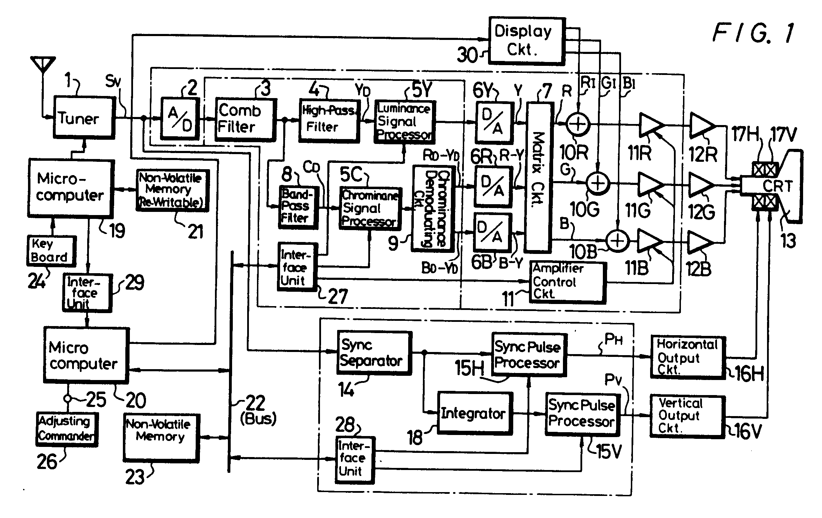

A block diagram showing an example of a previously proposed colour television receiver, in which the majority of signal processing is carried out in a digital fashion, is shown in Figure 1. An incoming television signal is received by an appropriate aerial (antenna) or fed in through a cable to a tuner or tuner section 1 of the receiver. The tuner 1 is only generally represented in Figure 1, because the elements contained therein can be conventional. Assuming that the tuner 1 contains the appropriate circuit elements up to a video detecting circuit, then the tuner 1 will produce a composite video signal Sv, which is converted to a digital signal by an analog-to-digital (A/D) converter 2. The digitally converted composite video signal is then fed to a comb filter 3 which produces an output signal which is fed to a digital high-pass filter 4 which separates a digital luminance signal Y_{D} from the composite digital video signal Sᵥ. The digital luminance signal Y_{D} is fed to a luminance signal processor or processing circuit 5Y, in which it is processed for contrast, grey scale values, and the like, as is known in conventional, digital, video signal processing. Thereafter, the processed digital luminance signal Y_{D} is reconverted back to an analog luminance signal Y in a digital-to-analog (D/A) converter 6Y and then is fed to a matrix circuit 7. The composite digital video signal from the comb filter 3 is fed also to a bandpass filter 8 which is operative to separate a digital carrier chrominance signal C_{D} from the composite video signal. The digital carrier chrominance signal C_{D} is fed to a chrominance signal processor or processing circuit 5C, in which automatic colour control, hue, colour saturation degree, and so on respectively are adjusted. Thereafter, the adjusted digital chrominance signal C_{D} is fed to a colour demodulating circuit 9, which produces a digital red colour difference signal (R_{D}-Y_{D}) and a digital blue colour difference signal (B_{D}-Y_{D}). The red and blue colour difference signals (R_{D}-Y_{D}) and (B_{D}-Y_{D}) are supplied to digital-to-analog (D/A) converters 6R and 6B, respectively, converted into analog colour difference signals (R-Y) and (B-Y), respectively, and fed to the matrix circuit 7. Outputs of the matrix circuit 7 represent red (R), green (G), and blue (B) signals, which are fed to a red adder 10R, a green adder 10G, and a blue adder 10b, in order to perform white balance. Outputs from the adders 10R, 10G, and 10B are fed to brightness adjusting amplifiers 11R, 11G, and 11B, respectively, and outputs from these amplifiers are fed via respective signal drive amplifiers 12R, 12G and 12B to a conventional colour picture tube or colour cathode ray tube (CRT) 13 for display.

As in a conventional (analog) television receiver, the composite video signal from the tuner 1 is fed also to a sync separator 14 which produces a sync pulse signal which is fed to a horizontal sync pulse processor or processing circuit 15H, in which it is converted to a horizontal sync pulse P_{H} having a predetermined pulse width and predetermined phase and then is fed to a horizontal output circuit 16H. An output of the horizontal output circuit 16H comprises a deflection signal which is fed to a horizontal deflection coil 17H which is arranged conventionally on the colour cathode ray tube 13. The sync pulse signal from the sync separator 14 is fed also to an integrator 18 which produces a vertical sync pulse signal which is fed to a vertical pulse processor or processing circuit 15V in which it is converted to a vertical sync pulse signal Pᵥ that has a predetermined pulse width and phase. The vertical sync pulse signal Pᵥ is fed to a vertical output circuit 16V that produces a vertical deflection signal which is fed to a vertical deflection coil 17V arranged conventionally on the colour cathode ray tube 13.

In modern television receivers, specifically in modern digital signal processing television receivers, it is known to utilise an internal microcomputer or similar unit for selecting the television channel and for controlling the overall operation of the television set. Thus, in the present example, a microcomputer 19 is provided to control the tuner 1 to select a desired channel and another microcomputer 20 is provided for control of the overall television receiver. Inputs for the desired television channel and other functions and operating modes of the television receiver are provided to the microcomputer 19 by a key panel or keyboard 24, which may comprise a remote control unit or be a bank of switches on the front of the receiver. Typically, the keyboard 24 is provided with a plurality of keys or buttons by means of which the user can select a channel for viewing and can adjust the contrast, brightness, hue, colour saturation degree and the like of the picture being displayed. A non-volatile memory 21 is provided in association with the microcomputer 19, so that the various values of contrast, brightness, hue, colour saturation and the like that have been selected using the key-board 24 are retained, even after the power switch of the television receiver is turned off, thereby precluding the necessity to reset all of these various parameters each time the television receiver is operated anew.

The values stored in the non-volatile memory 21, which of course is rewritable because the various values may be altered by use of the keyboard 24, are better thought of as offset values that represent differences from respective standard values for these various picture parameters. The standard values for the parameters, such as contrast, brightness, hue, colour saturation degree, and the like, are stored in a separate non-volatile memory 23. Also stored in the memory 23 are other data, such as data relating to white balance, horizontal deflection, vertical deflection, and so on, which need not be adjusted by the user but must, of course, be adjusted by the manufacturer at the time the set is fabricated and also, possibly, by a service technician if the receiver requires servicing. The data that is to be stored in the memory 23 is adjusted by means of an adjusting commander 26, which may be connected temporarily at a terminal 25 to the microcomputer 20 when manufacture and assembly of the set has been completed.

Thus, when the main power switch of the television receiver of Figure 1 is turned on, the microcomputer 19 operates to read from the memory 21 the channel selection data, which had been selected prior to the time that the power switch of the receiver was turned off. This data then is supplied to the tuner 1 to reselect the channel previously selected before the receiver was turned off. Additionally, the microcomputer 19 reads the data of the various offset values relating to brightness and the like from the non-volatile memory 21 and supplies such data through an interface unit 29 to the microcomputer 20. The microcomputer 20 reads also the data relative to the brightness, white balance, and horizontal and vertical deflection from the memory 23, which data then is supplied through a bus 22 and an interface unit 27 to an amplifier control circuit 11. The amplifiers 11R, 11G, and 11B then are controlled by the amplifier control circuit 11 so that the three primary-colour signals red (R), green (G), and blue (B) are adjusted appropriately to establish the brightness and white balance, as determined by the standard values retained in the memory 23. Furthermore, the microcomputer 20 reads from the memory 23 the horizontal and vertical deflection data and supplies such data through a further interface unit 28 to the sync pulse processors 15H and 15V, respectively, which act to adjust the horizontal and vertical deflections to the standard values as retained in the memory 23.

Accordingly, it will be seen that the microcomputer 20 reads the data representing standard values of contrast, hue, colour saturation degree, horizontal and vertical deflection and the like from the memory 23. Then, the data representing the offset values and the data representing the standard values are added to each other and the summed data supplied through the interface unit 27 to the signal processors 5Y and 5C, in which the signals Y_{D} and C_{D}, respectively, are adjusted such that the predetermined contrast, hue, colour saturation degree, and the like are obtained. The colour cathode ray tube 13 then displays the television picture of the channel that had been selected when the power switch of the receiver was turned off, and such display is in the same state as previously selected prior to the termination of viewing. The data that is set into the interface units 27 and 28 is latched in registers contained internally therein (not shown in Figure 1) and such data is latched therein until new data is supplied to the respective interface unit.

The keyboard or key panel 24 may include numerous buttons or keys and, when the user operates such keys, the microcomputer 19 reads from the memory 21 the data relating to the selected channel that previously has been set in the memory 21 in accordance with the operated key. Typically, ten keys are provided for channel selection. This data then is fed to the tuner 1 so that it is placed in the channel selection state as designated by the appropriate keys of the key panel 24. At that same time, the data corresponding to the selected channel is written in the memory 21, in anticipation of the time when the power switch will be turned off, so that, when the receiver is turned back on, this channel will be selected.

As a further example, each time that the hue key on the key panel 24 is depressed, the data relating to the offset value of the hue data stored in the memory 21 is updated, and this updated, offset data then is supplied through the interface unit 27 to the appropriate signal processor, which in this case is the chrominance signal processor 5C, which then adjusts the hue of the displayed picture accordingly.

Typically, in colour television receivers of this kind, a display circuit is provided, and in the example of Figure 1 a display circuit 30 is used to display the selected channel on the screen of the colour cathode ray tube 13 upon channel selection. Such display circuits frequently also are used to display the sound or audio volume level each time such volume is adjusted. Channel data and sound volume data for use by the display circuit 30 are provided by the microcomputer 19 through the microcomputer 20. Thus, the display circuit 30 produces red (Rₗ), green (Gₗ), and blue (Bₗ) primary colour signals that then are supplied to the adders 10R, 10G, 10B, respectively, so that the selected channel, or the selected sound volume, or the like, are displayed on the screen of the colour cathode ray tube 13, being superimposed on the television picture being presented for viewing.

Concerning the general techniques involved in manufacturing television receivers of the type shown typically in Figure 1, the portions of the circuit diagram shown in Figure 1 that are enclosed by single-dot chain lines typically are each formed on one integrated circuit chip. These chips then are used to fabricate commercial television receivers. One source for these chips is the International Telephone and Telegraph Corporation (ITT) and, in that regard, attention is directed to the brochure "DIGIT 2000 VLSI Digital TV System" published by ITT.

In the receiver of Figure 1, the data stored in memory 23 is read out therefrom by the microcomputer 20 each time that the power switch of the television receiver is turned on. Then, in accordance with that data, the respective signal processors 5Y and 5C, the pulse processors 15H and 15V and so on are preset initially or stated another way, are initialised. This situation poses no problem because, once the initially preset data is contained in the memory 23, it can be read out appropriately each time that the power switch of the receiver is turned on. Nevertheless, there is a serious problem when the power switch of the television receiver is turned on in the adjusting mode when there is no initially preset data in the memory 23. This situation can occur at the time that the standard value data is to be written into the memory 23 by the adjusting commander 26, that is, at the time that manufacture of the set finally has been completed. In other words, at the time when the power switch of the receiver is first turned on in the adjusting mode there is nothing stored in the memory 23 or, if anything is stored there, it is only random data, so that the values of the respective circuit parameters may well be, and quite frequently are, set at abnormal, non-functional values. This then raises the serious question that an undue influence can be exerted upon the respective circuit portions and seriously damage such circuits. For example, if the horizontal and vertical amplitudes are caused to be increased by such abnormal data, or if the horizontal and vertical oscillation frequencies are drastically decreased by such random or abnormal data, there is a very real chance that the horizontal output circuit and vertical output circuit could be destroyed.

Embodiments of the present invention that will now be described provide systems for preventing or minimising any possibility that the various circuit elements or circuit sections of the receiver will be damaged by such abnormal pre-initialisation values that might be contained within the various digital memories and registers in the system.

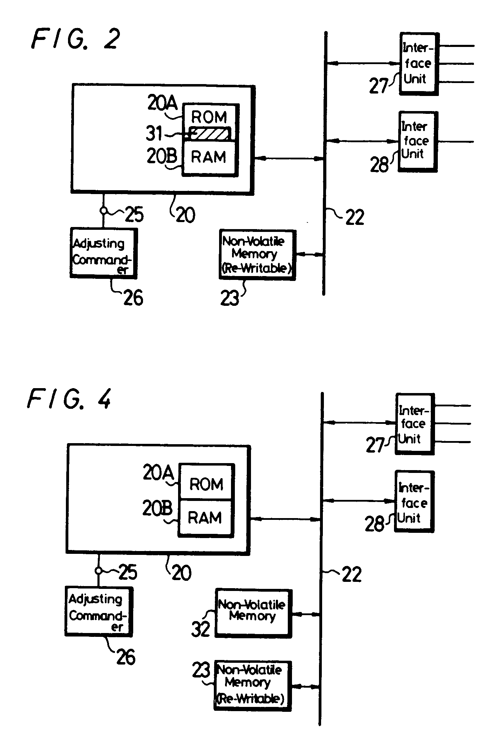

Figure 2 shows an embodiment in which a read only memory (ROM) 20A and a random access memory (RAM) 20B are provided as part of the microcomputer 20. Moreover, in this embodiment, a part of the read only memory 20A is provided as a storage region 31 in which average initial setting data, that corresponds to each of the various data points that ultimately are to be stored in the memory 23, previously has been written and retained. The data stored in the region 31 of the ROM 20A cannot be rewritten and is selected to be common to each set or receiver of a specific kind, that is to all models within a specific model line.

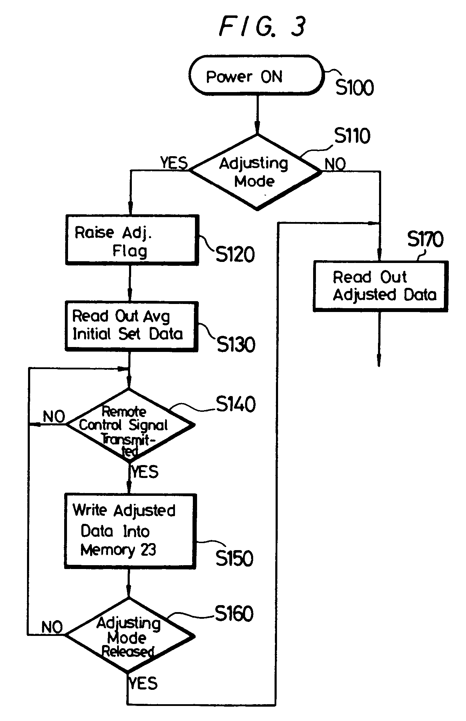

In this embodiment, the circuit of Figure 2 is operated in accordance with a selected method represented by a routine shown in the flow chart of Figure 3. Referring to Figure 3, after the power switch of the television receiver is turned on, as represented in a step S100, it is determined in a step S110 whether the adjusting mode is present or not. For example, when the adjusting commander 26 is connected at the connector 25 of the microcomputer 20, it is determined or judged that the television receiver is in the adjusting mode. If the receiver is judged to be in the adjusting mode, the method proceeds to a step S120, in which an adjusting flag is raised to indicate that the adjusting mode is present, and then to a step S130, in which the average, initial, standard data for each circuit portion, which has been stored in the region 31 of the ROM 20A, is read out therefrom and set in each of the respective circuit portions of the receiver. When such data has been read out completely from the section 31 of the ROM 20A, the method moves to a step S140 at which it is determined or judged whether a remote control signal is being transmitted from the adjusting commander 26. If such remote control signal is being transmitted from the adjusting commander 26, then each circuit portion is adjusted appropriately and the data for each of the circuit portions is written into the memory 23. This writing of the data into the memory 23 occurs at a step S150. Once the adjusted data has been written into the memory 23 the method proceeds to a step S160 at which it is judged whether the television receiver remains in the adjusting mode. Releasing of the adjusting mode may be accomplished by operating an adjusting end key, for example, an EXIT key typically is provided on the adjusting commander 26, whereby the adjusting mode flag is turned off and the adjusting mode is released. If the adjusting mode is determined to be released, the method moves to a step S170 at which the data that was written in during the adjusting mode is read out from the memory 23 and such data then is set in each circuit portion appropriately. On the other hand, if the adjusting mode is judged not to be released, then the step S160 indicates that the step S140 and the subsequent steps are to be repeated. The steps schematically depicted in Figure 3 are given by way of example only and, of course, other embodiments of this method could be provided following the teaching of the foregoing disclosure to accommodate forms of digital television receivers that differ from the example of Figure 1.

According to the embodiment described above, when the power switch of the television receiver is turned on in the adjusting mode, the average initial values that are set into the respective parts of each of the circuit portions are those corresponding to the data that previously had been stored in the region 31 of the ROM 20A. Accordingly, even if the initial set data is not already written in the memory 23, no circuit section ever can be set to an abnormal value and there is little or no possibility that any circuit section can be damaged or destroyed.

Another embodiment of the present invention is represented by the block diagram of Figure 4, which shows only portions of the television receiver. In the embodiment of Figure 4, a non-volatile memory 32, which contains average predetermined set data corresponding to the data written into the memory 23, is arranged outside of the microcomputer 20 and is connected to the data bus 22. Thus, in this embodiment, when the power switch of the television receiver is turned on in the adjusting mode, the average initial set data of the respective circuit sections is derived from this external non-volatile memory 32, instead of from the fixed portion 31 of the internal ROM 20A, and then is set into each circuit section appropriately. It will be clear that in accordance with the embodiment of Figure 4, the exact same operation and effects are possible as those described above in relation to Figure 2 following the method depicted in Figure 3.

## Claims

1. Control apparatus for controlling the operation of a television receiver that processes a television signal in digital form under the control of digital data stored in at least one register of the receiver, the control apparatus comprising:
first memory means (23,21) in the television receiver for storing control data representing display parameters to be set in the at least one register on turning on the television receiver for controlling the television receiver, said control data comprising standard data values input during an adjusting mode and offset data; and
second memory means (20A, 32) in the television receiver, the second memory means being non-volatile and non-rewritable;
characterised by:
the second memory means (20A, 32) containing, prior to the television receiver being turned on for the first time, predetermined initial control data representing initial display parameters for the receiver; and
control means (20) in the television receiver connected to the first and second memory means and operable when the television receiver is turned on for the first time, in said adjusting mode, to cause the predetermined initial control data from the second memory means to be set in the at least one register instead of said control data from said first memory means.

2. Control apparatus according to claim 1 comprising manually operable means (24) for producing adjusting data for use in controlling the television receiver, the first memory means (21) being connected to store the adjusting data from the manually operable means for producing adjusted data whereby the processing of the television data is also under the control of the adjusted data, said control data comprising said adjusted data.

3. Control apparatus according to claim 2 in which the first memory means (21) is a non-volatile and re-writable memory.

4. Control apparatus according to claim 2 or claim 3 comprising means for writing the adjusted data set in the first memory means (21) into the at least one register each subsequent time a power switch of the television receiver is turned on following the first time.

5. Control apparatus according to claim 2, claim 4 or claim 5 in which the first memory means comprises first and second non-volatile memories (23, 21), the first memory (23) being arranged to store a predetermined standard value of data and the second memory (21) being arranged to store an offset value of data, said adjusted data comprising a sum of said standard data and said offset data.

6. A method of operating a television receiver that processes a television signal in digital form under the control of digital data stored in a register of the receiver and includes an adjusting controller (26), the method comprising the steps of:
providing first memory means (23, 21) in the television receiver for storing control data representing display parameters to be set in the at least one register on turning on the television receiver for controlling the television receiver, said control data comprising standard data values input during an adjusting mode and offset data; and
providing second memory means (20A, 32) in the television receiver, the second memory means being non-volatile and non-rewritable;
characterised by:
the second memory means (20A, 32) containing, prior to the television receiver being turned on for the first time, predetermined initial control data representing initial display parameters for the receiver; and
determining (S110) whether the television receiver is in said adjusting mode and, when the television receiver is determined to be in said adjusting mode, for the first time the television receiver is turned on, causing (S130) the predetermined initial control data from the second non-volatile memory means to be set in the at least one register instead of said control data from said first memory means.

7. A method according to claim 6 including the step of providing the initialisation data by statistically determining average values for such data.

8. A method as claimed in claim 6 or claim 7 including the step (12) of providing a data flag indicating the presence of the adjusting mode upon affirmative determination thereof.

9. A method as claimed in claim 6, claim 7 or claim 8 wherein the first memory means (23) is a rewritable memory and wherein the method comprises the steps of:
using the adjusting controller (26) to enter adjusting data into the first memory means; and
adjusting the predetermined initial control data set in the register in accordance with the adjusting data in the first memory means.

## Patentansprüche

1. Steuereinrichtung zur Steuerung des Betriebs eines Fernsehempfängers, der ein Fernsehsignal in digitaler Form unter der Steuerung von digitalen Daten verarbeitet, die in zumindest einem Register des Empfängers gespeichert sind, welche Steuereinrichtung umfaßt:
ein erstes Speichermittel (23, 21) im Fernsehempfänger zum Speichern von Steuerdaten, die Darstellungs-Parameter darstellen, die beim Einschalten des Fernsehempfängers zwecks Steuerung desselben in das zumindest eine Register zu setzen sind, wobei die Steuerdaten Standarddatenwerte, die während eines Einstellbetriebszustandes eingegeben sind, und Abweichungsdaten umfassen; und
ein zweites Speichermittel (20A, 32) im Fernsehempfänger, welches zweite Speichermittel nichtflüchtig und nichtüberschreibbar ist;
dadurch gekennzeichnet, daß
das zweite Speichermittel (20A, 32) vor dem erstmaligen Einschalten des Fernsehempfängers vorbestimmte Initialisierungs- oder Anfangssteuerdaten enthält, die anfängliche Darstellungs-Parameter für den Empfänger darstellen; und
ein Steuermittel (20) im Fernsehempfänger mit dem ersten und dem zweiten Speichermittel verbunden und betreibbar ist im Einstellbetriebszustand, wenn der Fernsehempfänger erstmalig eingeschaltet wird, um zu bewirken, daß anstelle der Steuerdaten aus dem ersten Speichermittel die vorbestimmten Anfangssteuerdaten aus dem zweiten Speichermittel in das zumindest eine Register gesetzt werden.

2. Steuereinrichtung nach Anspruch 1, mit einem von Hand betätigbaren Mittel (24) zum Erzeugen von Einstelldaten zur Benutzung beim Steuern des Fernsehempfängers, wobei das erste Speichermittel (21) angeschlossen ist, um die Einstelldaten aus dem von Hand betätigbaren Mittel zum Erzeugen eingestellter Daten zu speichern, wodurch die Verarbeitung der Fernsehdaten ebenfalls unter der Steuerung der eingestellten Daten steht, wobei die Steuerdaten die eingestellten Daten umfassen.

3. Steuereinrichtung nach Anspruch 2, in welcher das erste Speichermittel (21) ein nichtflüchtiger und überschreibbarer Speicher ist.

4. Steuereinrichtung nach Anspruch 2 oder Anspruch 3, mit Mitteln zum Einschreiben der eingestellten Daten, welche im ersten Speichermittel (21) gesetzt sind, in das zumindest eine Register bei jedem folgenden Mal, wenn ein Netzschalter des Fernsehempfängers nach einem ersten Mal eingeschaltet wird.

5. Steuereinrichtung nach Anspruch 2, Anspruch 4 oder Anspruch 5, in welcher das erste Speichermittel erste und zweite nichtflüchtige Speicher (23, 21) umfaßt, wobei der erste Speicher (23) vorgesehen ist, einen vorbestimmten Standardwert von Daten zu speichern, und wobei der zweite Speicher (21) vorgesehen ist, einen Abweichungswert von Daten zu speichern, wobei die eingestellten Daten eine Summe der Standarddaten und der Abweichungsdaten aufweisen.

6. Verfahren zum Betreiben eines Fernsehempfängers, der ein Fernsehsignal in digitaler Form unter der Steuerung von digitalen Daten, die in einem Register des Empfängers gespeichert sind, verarbeitet und eine Einstellsteuereinrichtung (26) enthält, welches Verfahren die Schritte umfaßt zum:
Bereitstellen eines ersten Speichermittels (23, 21) im Fernsehempfänger zum Speichern von Steuerdaten, die Darstellungs-Parameter darstellen, die beim Einschalten des Fernsehempfängers zwecks Steuerung desselben in das zumindest eine Register zu setzen sind, wobei die Steuerdaten Standarddatenwerte, die während eines Einstellbetriebszustandes eingegeben werden, und Abweichungsdaten umfassen; und
Bereitstellen eines zweiten Speichermittels (20A, 32) im Fernsehempfänger, welches zweite Speichermittel nichtflüchtig und nichtüberschreibbar ist,
gekennzeichnet durch
vorbestimmte Initialisierungs- oder Anfangssteuerdaten, die anfängliche Darstellungs-Parameter für den Empfänger darstellen und im zweiten Speichermittel (20A, 32) vor dem erstmaligen Einschalten des Fernsehempfängers enthalten sind; und
Feststellen (S110), ob sich der Fernsehempfänger im Einstellbetriebszustand befindet, und Bewirken (S130), daß die vorbestimmten Anfangssteuerdaten aus dem zweiten nichtflüchtigen Speichermittel anstelle der Steuerdaten aus dem ersten Speichermittel in das zumindest eine Register gesetzt werden, wenn festgestellt ist, daß sich der Fernsehempfänger im Einstellbetriebszustand befindet und erstmalig eingeschaltet wird.

7. Verfahren nach Anspruch 6, mit dem Schritt des Bereitstellens der Anfangsdaten durch statistisches Bestimmen von Mittelwerten für derartige Daten.

8. Verfahren nach Anspruch 6 oder Anspruch 7, mit dem Schritt (12) des Erzeugens eines Datenkennzeichens, welches das Vorliegen des Einstellbetriebszustandes auf eine bejahende Entscheidung darüber anzeigt.

9. Verfahren nach Anspruch 6, Anspruch 7 oder Anspruch 8, in welchem das erste Speichermittel (23) ein überschreibbarer Speicher ist und das Verfahren die Schritte aufweist zum
Benutzen der Einstellsteuereinrichtung (26), um Einstelldaten in das erste Speichermittel einzugeben; und
Einstellen der in das Register gesetzten vorbestimmten Anfangssteuerdaten in Übereinstimmung mit den Einstelldaten im ersten Speichermittel.

## Revendications

1. Appareil de commande destiné à commander le fonctionnement d'un récepteur de télévision qui traite un signal de télévision sous forme numérique sous commande de données numériques mémorisées dans au moins un registre du récepteur, l'appareil de commande comprenant :
un premier moyen à mémoire (23, 21) disposé dans le récepteur de télévision et servant à mémoriser des données de commande représentant des paramètres d'affichage à placer dans le ou les registres lors de la mise sous tension du récepteur de télévision afin de commander le récepteur de télévision, lesdites données de commande comprenant des valeurs de données standard introduites pendant un mode de réglage et des données décalées ; et
un deuxième moyen à mémoire (20A, 32) disposé dans le récepteur de télévision, le deuxième moyen à mémoire étant rémanent et non réinscriptible ;
caractérisé par :
le fait que le deuxième moyen à mémoire (20A, 32) contient, avant que le récepteur de télévision ait été mis sous tension pour la première fois, des données de commande initiales prédéterminées représentant des paramètres d'affichage initiaux du récepteur ; et
un moyen de commande (20) disposé dans le récepteur de télévision, qui est connecté aux premier et deuxième moyens à mémoire et a pour fonction, lorsqu'on met le récepteur de télévision sous tension pour la première fois, dans ledit mode de réglage, de provoquer le placement, dans le ou les registres, des données de commande initiales prédéterminées venant du deuxième moyen à mémoire, au lieu desdites données de commande venant dudit premier moyen à mémoire.

2. Appareil de commande selon la revendication 1, comprenant un moyen (24) actionnable manuellement, qui sert à produire des données de réglage destinées à être utilisées dans la commande du récepteur de télévision, le premier moyen à mémoire (21) étant connecté de façon à mémoriser les données de réglage venant du moyen actionnable manuellement pour produire des données réglées, de sorte que le traitement des données de télévision est également sous commande des données réglées, lesdites données de commande comprenant lesdites données réglées.

3. Appareil de commande selon la revendication 2, où le premier moyen à mémoire (21) est une mémoire rémanente et réinscriptible.

4. Appareil de commande selon la revendication 2 ou 3, comprenant un moyen qui sert à écrire les données réglées, qui ont été placées dans le premier moyen à mémoire (21), dans le ou les registres à chaque suivante fois où, à la suite de la première fois, l'interrupteur d'alimentation du récepteur de télévision est mis sous tension.

5. Appareil de commande selon la revendication 2, 4 ou 5, où le premier moyen à mémoire comprend des première et deuxième mémoires rémanentes (23, 21), la première mémoire (23) étant destinée à mémoriser une valeur standard prédéterminée de données, et la deuxième mémoire (21) étant destinée à mémoriser une valeur décalée de données, lesdites données réglées comprenant la somme desdites données standard et desdites données décalées.

6. Procédé de fonctionnement d'un récepteur de télévision qui traite un signal de télévision sous forme numérique sous commande de données numériques mémorisées dans un registre du récepteur et comporte un dispositif de commande de réglage (26), le procédé comprenant les opérations suivantes :
prévoir un premier moyen à mémoire (23, 21) dans le récepteur de télévision afin de mémoriser des données de commande représentant des paramètres d'affichage à placer dans le ou les registres lors de la mise sous tension du récepteur de télévision afin de commander le récepteur de télévision, lesdites données de commande comprenant des valeurs de données standard introduites pendant un mode de réglage et des données décalées ; et
prévoir un deuxième moyen à mémoire (20A, 32) dans le récepteur de télévision, le deuxième moyen à mémoire étant rémanent et non réinscriptible ;
caractérisé par :
le fait que le deuxième moyen à mémoire (20A, 32) contient, avant qu'on ait mis le récepteur de télévision sous tension pour la première fois, des données de commande initiales prédéterminées représentant des paramètres d'affichage initiaux du récepteur ; et
déterminer (S110) si le récepteur de télévision est ou non dans ledit mode de réglage et, lorsqu'il a été déterminé que le récepteur de télévision est dans ledit mode de réglage, faire (S130), à la première mise sous tension du récepteur de télévision, que les données de commande initiales prédéterminées venant du deuxième moyen à mémoire rémanent soient placés dans le ou les registres, au lieu desdites données de commande venant dudit premier moyen à mémoire.

7. Procédé selon la revendication 6, comportant l'opération qui consiste à produire les données d'initialisation par détermination statistique de valeurs moyennes de ces données.

8. Procédé selon la revendication 6 ou 7, comportant l'opération (12) qui consiste à fournir un drapeau, ou indicateur, de données qui indique la présence du mode de réglage lors d'une détermination affirmative de celui-ci.

9. Procédé selon la revendication 6, 7 ou 8, où le premier moyen à mémoire (23) est une mémoire réinscriptible et où le procédé comprend les opérations suivantes :
utiliser le dispositif de commande de réglage (26) pour introduire des données de réglage dans le premier moyen à mémoire ; et
ajuster les données de commande initiales prédéterminées placées dans le registre en fonction des données de réglage contenues dans le premier moyen à mémoire.
